(19)

Europäisches Patentamt

European Patent Office

Office européen des brevets

(11) **EP 3 853 388 B1**

(12) **EUROPEAN PATENT SPECIFICATION**

(45) Date of publication and mention
of the grant of the patent:
**09.08.2023 Bulletin 2023/32**

(21) Application number: **19780404.0**

(22) Date of filing: **09.09.2019**

(51) International Patent Classification (IPC):
$C21D\ 8/12$ *(2006.01)* $\qquad$ $C22C\ 38/02$ *(2006.01)*
$C22C\ 38/04$ *(2006.01)* $\qquad$ $C22C\ 38/06$ *(2006.01)*

(52) Cooperative Patent Classification (CPC):
**C22C 38/02; C21D 8/1261; C22C 38/04;**
**C22C 38/06;** Y02P 10/20

(86) International application number:
**PCT/IB2019/057571**

(87) International publication number:
**WO 2020/058801 (26.03.2020 Gazette 2020/13)**

(54) **HOT ROLLED STEEL SHEET WITH HIGH HOLE EXPANSION RATIO AND MANUFACTURING PROCESS THEREOF**

WARMGEWALZTES STAHLBLECH MIT HOHEM LOCHEXPANSIONSVERHÄLTNIS UND VERFAHREN ZU SEINER HERSTELLUNG

TÔLE D'ACIER LAMINÉE À CHAUD PRÉSENTANT UN TAUX D'EXPANSION DE TROU ÉLEVÉ ET SON PROCÉDÉ DE FABRICATION

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Validation States:
**MA**

(30) Priority: **20.09.2018 PCT/IB2018/057246**

(43) Date of publication of application:
**28.07.2021 Bulletin 2021/30**

(73) Proprietor: **ArcelorMittal**
**1160 Luxembourg (LU)**

(72) Inventor: **SARKAR, Sujay**
**57000 Metz (FR)**

(74) Representative: **Lavoix**
**2, place d'Estienne d'Orves**
**75441 Paris Cedex 09 (FR)**

(56) References cited:
**EP-A1- 2 881 481** $\qquad$ **EP-A1- 3 263 728**
**WO-A1-2016/079565** $\qquad$ **WO-A1-2017/108897**
**WO-A1-2017/125809** $\qquad$ **WO-A1-2018/115935**
**WO-A1-2018/115935**

**Description**

The present invention relates to a hot-rolled steel sheet, having a yield strength comprised between 780MPa and 1000MPa, a tensile strength comprised between 950MPa and 1150MPa, preferably between 980MPa and 1150MPa, and a hole expansion ratio higher than 45%, which can be used for the manufacturing of structural parts of automotive vehicles.

Decreasing the weight of vehicles to reduce $CO_2$ emissions is a major challenge in the automotive industry. This weight saving must be coupled with safety requirements. New high strength steels are continuously developed by the steelmaking industry to meet these requirements. As the use of high strength steels in automotive applications increases, there is a growing demand for steels having both an increased strength and an improvement in hole expansion performance. Thus, several families of steels offering various strength levels have been proposed.

The publication EP1138796 describes a hot rolled steel sheet with a tensile strength higher than 1000MPa, usable for automotive parts. The fabrication of this hot rolled steel sheet needs mandatory costly alloying elements such as molybdenum which, due to its hardening effect, enables to obtain a fully bainitic structure and high mechanical properties, and vanadium which makes it possible to obtain fine nitrides and carbides and high level of tensile mechanical properties.

In the publication WO2018108653, a hot rolled flat steel sheet is produced with a tensile strength of 800 - 1500 MPa, a yield strength of more than 700 MPa, an elongation of 7-25% and a hole expansion value of more than 20%. This martensitic hot rolled steel sheet is produced by means of so-called quenching and partitioning process wherein the steel sheet is first cooled in a range wherein martensitic transformation is incomplete. Thereafter, the steel sheet is reheated in a temperature range wherein the carbon is partitioned, i.e. diffuses from the martensite and enriches austenite so to stabilize it. The steel sheet is then cooled down to room temperature. Thus, the final steel sheet contains partitioned martensite, fresh martensite and retained austenite. However, implementing such process requires specific device and production line.

The publication WO2012130434 describes a heat treatment which is variable over the width of a coated sheet having a Dual-Phase or a martensitic microstructure, so to obtain metal sheet with tailored mechanical properties over the width of the metal strip. However, this method needs specific and dedicated production equipment. Furthermore, localized heat treatments may create residual stresses and flatness issues. WO2018115935 discloses a tempered and hot rolled steel comprising 4-20% residual austenite, 0-15% ferrite, 40-85% bainite and a minimum of 5% tempered martensite wherein the cumulated amounts of tempered martensite and residual austenite is between 10 and 30%. The steel is used for making vehicle parts.

One object of the invention is to provide a high strength hot rolled steel sheet without the need of high amount of costly elements additions.

Another object of this invention is to manufacture a hot rolled steel sheet by using conventional production line and without increased fabrication cost.

Thus, the invention aims to provide a flat hot-rolled high-strength steel with a yield strength comprised between 780MPa and 1000MPa, a tensile strength TS comprised between 950MPa and 1150MPa, preferably between 980MPa and 1150MPa, a total elongation higher than 8%, and an expansion ratio HER higher than 45%.

Another object of the invention is to provide a steel sheet having a high resistance to crack initiation and propagation, thus making it possible to prevent any brittle fracture of the parts fabricated from the steel sheet. To this end, the invention aims to provide a flat hot-rolled steel sheet with a Charpy V fracture energy higher than $50J/cm^2$ at 20°C.

This invention concerns a hot-rolled steel sheet having the chemical composition comprising, in weight %: $0.15\% \leq C \leq 0.20\%$, $0.50\% \leq Mn \leq 2.00\%$, $0.25\% \leq Si \leq 1.25\%$, $0.10\% \leq Al \leq 1.00\%$, with $1.00 \leq (Al + Si) \leq 2.00$, $0.001\% \leq Cr \leq 0.250\%$, $P \leq 0.02\%$, $S \leq 0.005$, $N \leq 0.008\%$ and optionally one or more elements among: $0.005\% \leq Mo \leq 0.250\%$, $0.005\% \leq V \leq 0.250\%$, $0.0001\% \leq Ca \leq 0.0030\%$ and $0.001\% \leq Ti \leq 0.025\%$ the remainder being iron and unavoidable impurities, and wherein the microstructure comprises in surface fraction, ferrite and bainite, the sum of which being greater than 5% and strictly lower than 20%, the remainder consisting of tempered martensite. In a preferred embodiment, the silicon content is comprised between 0.40% and 0.90%.

In another preferred embodiment, the aluminium content is comprised between 0.30% and 0.90%.

In another preferred embodiment, the sum of aluminium and silicon content is between 1.20% and 2.00%.

The hot rolled steel sheet of the invention has the yield strength YS comprised between 780MPa and 1000MPa and the tensile strength TS between 950MPa and 1150MPa, preferably between 980MPa and 1150MPa. According to the invention, the total elongation of the steel is higher than 8%. According to the invention, the hole expansion value of the steel is higher than 45%.

According to the invention, the Charpy V energy of the steel is higher than $50J/cm^2$ at 20°C.

The thickness of the steel of the invention is comprised between 1.8 and 4.5 mm, preferably between 1.8 and 3.5mm.

According to the invention, the hot rolled steel sheet comprises a ferrite layer at the surface with a thickness less than 5% of the thickness of the said hot rolled steel sheet.

According to the invention, the hot rolled steel sheet is coated with a zinc or zinc-based alloy.

In a first embodiment, the zinc-based coating comprising from 0.01 to 8.0% by weight of Al, optionally from 0.2 to 8.0% by weight of Mg, the remainder being Zn.

In a second embodiment, the zinc-based coating comprising between 0.15 and 0.40% by weight of Al, the balance being Zn.

The present invention provides a method for producing the hot rolled steel sheet, comprising the following and successive steps:

- providing a steel semi-product with the composition mentioned above, then
- hot rolling said steel semi-product with a final rolling temperature comprised between 875°C and 950°C, so to obtain a steel sheet, then
- cooling said steel sheet at a cooling rate $V_{R1}$ higher than 50°C/s, so to obtain a cooled steel sheet, then
- coiling at a temperature $T_{coil}$ below 160°C, and below Mf, so to obtain a coiled steel sheet, then
- heat-treating the said coiled sheet to a heat-treating temperature $\theta_A$ for a duration $t_A$, $\theta_A$ and $t_A$ being such than $P_A = \theta_A (22+ \log_{10} t_A)$, is comprised between 15400 and 17500, $\theta_A$ being expressed in K, $t_A$ being expressed in hours.

In a first embodiment of the invention, the heat-treating step of the manufacturing process is performed by batch treatment in an inert or an HNX atmosphere, at a heat-treating temperature $\theta_A$ comprised between 400°C and 475°C, the duration $t_A$ at said heat-treating temperature being comprised between 10 and 25h.

In a second embodiment of the invention, the said heat-treating step is performed on a continuous annealing line, to a heat-treating temperature $\theta_A$ comprised between 500°C and 600°C, the duration $t_A$ at said heat-treating temperature being comprised between 40s and 100s, preferably between 50s and 100s.

In a preferred embodiment of the invention, the $P_A$ parameter is in the range 15500 and 17000.

The manufacturing process further comprises a pickling step after said coiling step and before heat-treating.

The manufacturing process further comprises a pickling step after said heat-treating.

In a first cooling scheme embodiment of the invention the cooling is performed by water cooling at a cooling rate $V_{R1}$ higher than 75°C/s.

In a second cooling scheme, the cooling at the cooling rate $V_{R1}$ is performed, until to reach an intermediate temperature Ti, comprised between 500 to 550°C, then, starting from Ti,

- a further air cooling is performed for a duration $t_2$ during 1 to 5 seconds, then
- the sheet is cooled at a cooling rate $V_{R2}$ higher than 40°C/s.

In a preferred embodiment of the invention, the said air cooling is performed for a duration $t_2$ during 2 to 3 seconds.

The steel sheet according to the invention can be used for the manufacturing of structural parts of automotive vehicles.

The invention will now be described in more details, but without introducing limitations, with reference to the appended figures:

- Figure 1 illustrates, for a steel composition according to the invention, the evolution of the hole expansion ratio HER as a function of the heat-treating parameter $P_A = \theta_A (22+ \log_{10} t_A)$.
- Figure 2 illustrates, for a steel composition according to the invention, the evolution of the tensile strength as a function of the parameter $P_A$.
- Figure 3 illustrates an example of microstructure of a hot rolled steel sheet according to the invention.
- Figure 4 illustrates an example of microstructure of a hot rolled steel sheet which does not correspond to the invention.
- Figure 5 illustrates the microstructure of an embodiment according to the invention, wherein the steel sheet contains a ferrite layer on its surface.

In the following description of the invention, the yield stress YS, the tensile strength TS and the total elongation of the steel sheet refer to Standard JIS Z2241. The hole expansion ratio HER refers to Standard ISO 16630:2009. To reach the desired microstructural and mechanical features, the chemical composition and process parameters are of significant importance. The steel, composition, expressed in weight percentage, is as follows:

- $0.15\% \leq C \leq 0.20\%$: if the carbon content is less than 0.15%, the tensile strength of 950MPa may not be reached. If the carbon content is higher than 0.20%, the yield strength and tensile strength may exceed 1000MPa and 1150MPa respectively, and the total elongation may be lower than 8%.
- $0.50\% \leq Mn \leq 2.00\%$: when manganese content is below 0.50%, the quenchability of the steel is reduced and the sum of ferrite and bainite surface fractions may not be strictly lower than 20%, thus the tensile strength may be lower than 950MPa. If manganese content is more than 2.00%, the risk of central segregation increases to the detriment of the yield strength, the tensile strength and the hole expansion value.

- $0.25\% \leq Si \leq 1.25\%$: Silicon is an element used for deoxidation in the liquid stage and for achieving solution hardening. If Si content is less than 0.25%, the quenchability of the steel is reduced. However, if Si exceeds 1.25%, the kinetics of carbides formation is reduced. Thus, the ferrite content may be higher than 20%, and the tensile strength may be lower than 950MPa. In a preferred embodiment, the silicon content is comprised between 0.40% and 0.90%

- $0.10\% \leq Al \leq 1.00\%$: aluminium addition contributes to efficient deoxidation in the liquid stage and favours the stabilization of ferrite. If aluminium content is below 0.10%, the sum of ferrite and bainite surface fractions of the hot rolled sheet may be lower than 5% and thus, the total elongation of the sheet may be lower than 8%. Beyond 1.00%, too much ferrite may be formed on cooling, thus the yield and tensile strength levels requested in the invention may be not achieved. In a preferred embodiment, the aluminium content is comprised between 0.30% and 0.90%.

- $1.00 \leq Al+Si \leq 2.00$: when the sum of silicon and aluminium contents is comprised between 1.00% and 2.00%, this makes it possible to obtain a microstructure containing more than 5% and less than 20% of ferrite and bainite, thus to obtain increased ductility and elongation. In a preferred embodiment, the sum of silicon and aluminium contents is comprised between 1.20% and 2.00%, to promote formation of a ferrite layer at the main surfaces of the steel sheet. The ferrite layer makes it possible to obtain the bending radius divided by the sheet thickness lower than 1 in the rolling direction and lower than 1.5 in the transverse direction.

- $P \leq 0.02\%$: If phosphorous content exceeds 0.02%, segregation at grain boundary may occur and the elongation of the steel sheet may be reduced. Furthermore, in such high amount, phosphorus may cause temper embrittlement when the coiled steel sheet is submitted to a further heat treatment. Preferably, phosphorous content is higher than 0.0005% since achieving phosphorous content at lower level is costly at the steelmaking shop, without corresponding significant benefit regarding the mechanical properties.

- $S \leq 0.005\%$: The sulphur content is limited at 0.005% so to lower the formation of sulphides which are detrimental regarding the sheet ductility. Preferably, the sulphur content is higher than 0.0005% since achieving lower level during steelmaking is very costly, without corresponding significant benefit regarding the mechanical properties.

- $N \leq 0.008\%$: If nitrogen content exceeds 0.008%, certain elements may precipitate in the liquid or in the solid state under the form of nitrides or carbonitrides. Coarse precipitates must be avoided since they reduce the ductility of the hot rolled steel sheet. Preferably, nitrogen content is higher than 0.001%. However, lowering nitrogen down to a content less than 0.001% is costly and does not bring significant improvement of mechanical properties.

- $0.001\% \leq Cr \leq 0.250\%$: Chromium improves quenchability. If Cr content is less than 0.001%, quenchability is not obtained. If Cr exceeds 0.250%, the risk of macro and micro segregation increases, and thus the tensile strength may be lower than 950MPa.

- $0.005\% \leq Mo \leq 0.250\%$: Molybdenum may be added as an optional element in order to increase the quenchability, i.e. making it possible to obtain more easily the formation of martensite on cooling. Below 0.005%, such effective effect on is not achieved. However, as molybdenum is a costly element, its content is limited to 0.250%, so that the manufacturing of the steel sheet is cost-effective.

- $0.005\% \leq V \leq 0.250\%$: Vanadium, as an optional element, makes it possible to obtain a steel sheet with a high toughness after batch heat-treating. However, addition above 0.250% is not cost-effective.

- $0.0001\% \leq Ca \leq 0.0030\%$: Calcium may be also added as an optional element. Addition of Ca at the liquid stage makes it possible to create fine oxides or oxysulfides. These particles act as nucleants for a subsequent fine precipitation of titanium nitrides/carbonitrides. The reduction in the size of the carbonitrides makes it possible to achieve improved hole expansion ability.

- $0.001\% \leq Ti \leq 0.025\%$: Titanium may be also added as an optional element: when titanium is higher than 0.025%, it is prone to precipitate in the liquid phase in the form of coarse titanium nitrides which reduce sheet ductility. However, reducing titanium at a level lower than 0.001% is difficult at the industrial stage and brings no supplemental effect on the mechanical properties.

The balance of the composition is iron and unavoidable impurities resulting from the smelting.

The microstructure of the hot rolled steel sheet according to the invention will now be detailed.

According to the invention, the sum of ferrite and bainite is greater than 5% and strictly lower than 20%. If the sum is not strictly lower than 20%, yield strength and tensile strength decrease and cannot reach the minimum value of 780Mpa and 950Mpa respectively. Moreover, the hole expansion ratio will be low. Below 5% of ferrite and bainite, ductility of the steel sheet is reduced. The remainder of the microstructure consists of tempered martensite. Within the frame of the invention, the tempered martensite is defined as recovered martensite which contains precipitated cementite which can be coalesced at the highest tempering temperatures. Its features correspond to the so-called stage 3 of martensite tempering, whose description is given in the publication of A. Constant, G. Henry, J.C. Charbonnier: "Principes de bases des traitements thermiques, thermomécaniques et thermochimiques des aciers", PYC Edition, 1992, pp. 190-191.

According to the invention, the steel sheet is manufactured through a hot rolling process. This makes it possible to obtain a steel sheet with two main parallel and opposite surfaces, the steel sheet having also edges which may be designated as secondary surfaces. According to an embodiment of the invention, the hot rolled steel sheet comprises a ferrite layer at its main surfaces, with a thickness less than 5% of the thickness of the said hot rolled steel sheet.

The process for manufacturing the hot rolled sheet will be now described.

A semi-product able to be further hot-rolled, is provided with the steel composition described above. This semi-product can be under the form of ingot or slab obtained by continuous casting, with a thickness being typically about 200mm. Alternatively, this semi-product can be also under the form of thin slab, with a thickness of the order of a few tens millimeters, or sheet, obtained by direct casting between contra-rotative rollers. The semi product is heated to a temperature higher than 1150°C, so to makes it possible to ease hot rolling, with a final hot rolling temperature comprised between 875°C and 950°C. Hot rolling at a temperature below 875°C promotes austenite, and then excessive formation of ferrite during cooling which reduces formability. If the hot rolling temperature exceeds 950°C, the tendency to create scale is increased thus the surface quality of the product is poor.

Then, the hot rolled product is cooled at a cooling rate $V_{R1}$ of at least 50°C/s to avoid ferrite formation, until a coiling temperature less than 160°C and also less than Mf, Mf designating the temperature of transformation end of austenite into martensite. According to the publication of Malcom Blair and Thomas L Stevens, "Steel castings Handbook - 6th edition", the martensite finish temperature Mf is 245°C lower than the martensite start temperature Ms, which can be calculated from a formula derived by Andrews published in Journal of the Iron and Steel Institute, 203, 721-727, 1965:

$$Ms(°C) = 785 - 453\ \%C - 16.9\ \%Ni - 15\ \%Cr - 9.5\ \%Mo + 217\ (\%C)^2 - 71.5\ \%C \times \%Mn - 67.6\ \%C \times \%Cr$$

In a preferred embodiment, the hot rolled product is coiled at a temperature which is less than 160°C and less than (Mf-10°C). In this manner, a high microstructural homogeneity is obtained along all the steel strip.

In one embodiment of the cooling scheme, the said cooling step is performed by a single-step cooling, with a water cooling at a cooling rate $V_{R1}$ higher than 75°C/s, to obtain martensitic microstructure matrix containing ferrite and bainite, the sum of which being more than 5% and strictly lower than 20% in surface area.

In another embodiment of the cooling scheme, the said cooling step is performed by a multi-step cooling, with a first cooling step at said cooling rate $V_{R1}$ so to reach an intermediate temperature Ti, comprised between 500 and 550°C. An air cooling is then immediately performed for a duration $t_2$ comprised between 1 and 5 seconds, preferably during 2 to 3 seconds, before a last cooling step at a cooling rate higher than 40°C/s. The multi-step cooling makes it possible to achieve a partial ferritic or bainitic transformation, thus 5 to 20 % of ferrite plus bainite is obtained, within a martensitic matrix. Whatever the cooling scheme, the hot rolled steel is thereafter heat-treated after coiling, at a temperature $\theta_A$, for a duration $t_A$, $t_A$ designating the duration at the temperature $\theta_A$, $\theta_A$ and $t_A$ being such that the heat-treatment parameter, $P_A = \theta_A (22+ \log_{10} t_A)$ is comprised between 15400 and 17500. Thus, $P_A$ takes into account the combined thermal influence of temperature and duration.

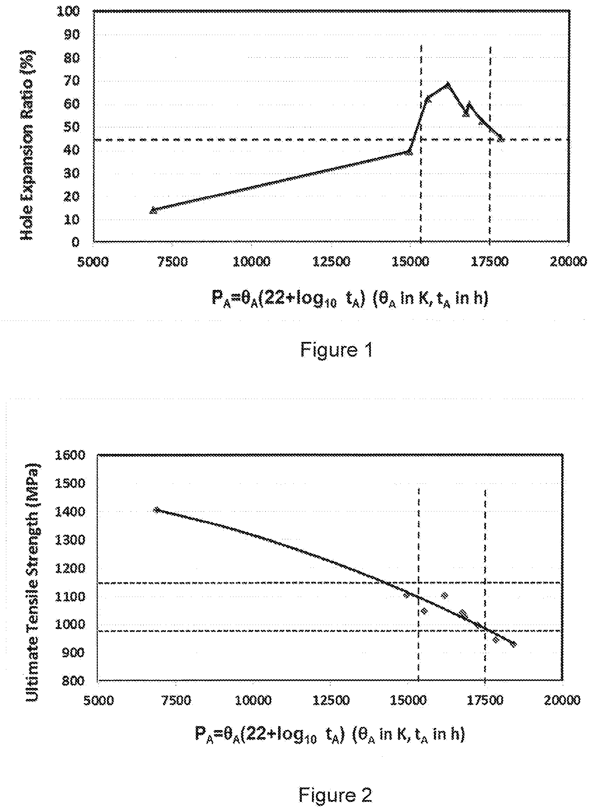

From prior art, it is known that some mechanical properties such as the hole expansion value and the total elongation are improved with high value of parameter $P_A$. On the contrary, when parameter $P_A$ increases, the yield strength and the tensile strength values are lowered. For martensitic steels, the publication WO2012130434 discloses that the mechanical properties are optimum when $P_A$ is between 13000 and 15000. In particular, the hole expansion value increases continuously with $P_A$. In a surprising manner, as shown in figure 1, the present invention has put in evidence that the hole expansion value decreases in a significant proportion above a specific value of $P_A$~16000. Thus, as demonstrated by the figures 1 and 2, the invention makes it possible to obtain the desired mechanical properties when $P_A$ value is in the range of 15400 and 17500, and in particular between 15500 and 17000.

According to the invention, the heat-treating step can be performed in a discontinuous (batch) or continuous manner.

In a first embodiment of the invention, the heat-treating step of the manufacturing process is performed by batch treatment of coil of the hot-rolled sheet in a furnace with an inert or an HNX atmosphere, at a heat-treating temperature $\theta_A$ comprised between 400°C and 475°C, the duration $t_A$ at said heat-treating temperature being comprised between 10 and 25 h so to obtain tempered martensite matrix which combines good formability and tensile properties.

In a second embodiment of the invention, the said heat-treating step is performed on a continuous annealing line, to a heat-treating temperature $\theta_A$ comprised between 500°C and 600°C, the duration $t_A$ at said heat-treating temperature being comprised between 40s and 100s, preferably between 50s and 100s, so to obtain tempered martensite matrix which combines good formability and tensile properties.

A first pickling step can be added after coiling and a second one after heat-treating so to remove surface oxides.

From prior art, it is known that martensitic steels subsequently tempered and slowly cooled, may exhibit low toughness. In the invention, the steel composition and the heat treatment conditions have been defined so to obtain a Charpy V energy of at least 50J/cm$^2$ at 20°C on the final hot rolled steel sheet. Thus, the obtained steel sheet is free from temper embrittlement.

The thickness of the hot rolled steel sheet is typically comprised between 1.8 and 4.5 mm, preferably between 1.8 and 3.5mm.

The invention will be now illustrated by the following examples, which are by no way limitative.

Example 1

Semi products under the form of casts with thickness ranging between 28 and 40mm were provided with compositions detailed in table 1. For the different compositions, the calcium content was 0.002wt%, the remainder of the composition is iron and impurities resulting from the smelting. The martensite finish temperature was calculated from the value of the martensite start temperature as: Mf = Ms - 245°C. These semi products were heated at a temperature higher than 1150°C and further hot rolled down to a thickness comprised between 1.8 and 4.5 mm. The table 2 details the manufacturing conditions which have been applied. Trials 1-15 correspond to the first cooling scheme embodiment described above, trials 16-18 correspond to the second cooling scheme condition described above. Pickling steps were performed after coiling and after heat-treating. In trials 4 and 9, the hot rolled steel sheets are galvanized (GI).

Table 1. Steel compositions (weight %) and martensitic transformation temperatures

| Grades | C | Mn | Si | Al | Cr | P | S | N | Mo | Ti | Si+Al | Mf (°C) |
|---|---|---|---|---|---|---|---|---|---|---|---|---|
| A | 0.18 | 1.65 | 0.75 | 0.87 | 0.026 | 0.01 | 0.001 | 0.003 | - | - | 1.62 | 172 |
| B | 0.18 | 1.64 | 0.68 | 0.81 | 0.023 | 0.01 | 0.001 | 0.002 | - | - | 1.49 | 169 |
| C | 0.17 | 1.66 | 0.71 | 0.80 | 0.020 | 0.01 | 0.004 | 0.004 | - | - | 1.51 | 174 |
| D | 0.17 | 1.66 | 0.77 | 0.85 | 0.028 | 0.01 | 0.001 | 0.004 | 0.006 | - | 1.62 | 173 |
| E | <u>0.21</u> | <u>2.20</u> | <u>1.50</u> | <u>0.05</u> | 0.200 | 0.01 | 0.001 | 0.005 | - | - | 1.55 | 142 |
| F | <u>0.14</u> | 1.58 | 0.71 | 0.78 | 0.056 | 0.01 | 0.001 | 0.004 | - | - | 1.49 | 190 |
| G | <u>0.13</u> | 1.30 | <u>0.12</u> | <u>0.03</u> | <u>0.270</u> | 0.02 | 0.004 | 0.007 | - | 0.01 | <u>0.15</u> | 193 |
| H | 0.20 | <u>2.60</u> | 1.17 | 0.56 | 0.020 | 0.02 | 0.001 | 0.005 | - | - | 1.73 | 147 |
| Underlined values: not corresponding to the invention. | | | | | | | | | | | | |

Table 2. Underlined values: not corresponding to the invention.

| Trial | Steel sheet | Hot rolling | Cooling scheme | | | | Coiling | Heat-treating | | | Coating |
|---|---|---|---|---|---|---|---|---|---|---|---|
| | | Finish rolling temperature (°C) | $V_{R1}$ (°C/s) | $T_i$ (°C) | $t_2$ (S) | $V_{R2}$ (°C/s) | $T_{coil}$ (°C) | $\theta_A$ (°C) | $t_A$ | $P_A$ | |
| 1 | A | 880 | 115 | - | - | - | 80 | 425 | 15h | 16177 | - |
| 2 | A | 900 | 90 | - | - | - | 120 | 450 | 15h | 16756 | - |
| 3 | B | 880 | 115 | - | - | - | 80 | 425 | 15h | 16177 | - |
| 4 | B | 895 | 105 | - | - | - | 35 | 525 | 90s | 16278 | GI |
| 5 | C | 900 | 90 | - | - | - | 120 | 450 | 15h | 16756 | - |
| 6 | D | 900 | 115 | - | - | - | 95 | 450 | 20h | 16847 | - |
| 7 | D | 935 | 110 | - | - | - | 75 | 450 | 20h | 16847 | - |
| 8 | A | 900 | 100 | - | - | - | <u>400</u> | - | - | - | - |
| 9 | B | 895 | 95 | - | - | - | 40 | 625 | 36s | <u>17960</u> | GI |
| 10 | C | 900 | 90 | - | - | - | 155 | 500 | 15h | <u>20001</u> | - - |
| 11 | D | <u>860</u> | 80 | - | - | - | 125 | 450 | 15h | 16756 | - |

(continued)

| Trial | Steel sheet | Hot rolling | Cooling scheme | | | | Coiling | Heat-treating | | | Coating |
|---|---|---|---|---|---|---|---|---|---|---|---|
| | | Finish rolling temperature (°C) | $V_{R1}$ (°C/s) | $T_i$ (°C) | $t_2$ (S) | $V_{R2}$ (°C/s) | $T_{coil}$ (°C) | $\theta_A$ (°C) | $t_A$ | $P_A$ | |
| 12 | E | 935 | 110 | - | - | - | 75 | 450 | 20h | 16847 | - |
| 13 | F | 900 | 90 | - | - | - | 120 | 450 | 15h | 16756 | - |
| 14 | G | 900 | 90 | - | - | - | 120 | 450 | 15h | 16756 | - |
| 15 | H | 880 | 115 | - | - | - | 80 | 425 | 15h | 16177 | - |
| 16 | A | 910 | 95 | 540 | 3 | 65 | 85 | 400 | 15h | 15598 | - |
| 17 | D | 885 | 110 | 525 | 2 | 75 | 90 | 425 | 10h | 16054 | - |
| 18 | B | 880 | 100 | 550 | 8 | 75 | 125 | 400 | 15h | 15598 | - |

The microstructure of the heat-treated steel sheet was determined on polished specimens etched with Nital and observed with optical and Scanning Electron Microscope. The surface fractions of the different constituents of the microstructures were measured through image analysis coupled with quantification. Furthermore, the eventual presence of a ferrite layer at the main surfaces of the steel sheet was assessed. The proportion of the constituents and the thickness of the eventual ferrite layer are reported in Table 3. The table 4 gathers the mechanical properties of the final heat-treated steel sheet. The Yield stress YS, the ultimate tensile strength TS and the total elongation have been determined according to standard JIS Z2241. Hole expansion ratio has been determined according to ISO 16630:2009. Charpy V energy has been measured at 20°C on sub-thickness sized specimens, the measured fracture energy being divided by the ligament area under the V notch of the test specimen.

The hole expansion method consists of measuring the initial diameter Di of a hole before stamping (nominally: 10mm), then the final diameter Df of the hole after stamping, determined when through cracks are observed in the thickness direction of the sheet on the edges of the hole. The hole expansion ability Ac % is determined according to the following formula: Ac= 100*(Df-Di)/Di. Ac is therefore used to quantify the ability of a sheet to withstand stamping at the level of a cut orifice.

Table 3: Microstructural features of the heat-treated final steel sheet.

| Trial | Sheet thickness (mm) | (Ferrite + Bainite) (%) | Tempered martensite (%) | Presence of Ferrite layer | Ferrite layer thickness ratio over the sheet thickness (%) |
|---|---|---|---|---|---|
| 1 | 2.0 | 12 | 88 | Yes | 0.75 |
| 2 | 2.1 | 18 | 82 | Yes | 0.95 |
| 3 | 2.0 | 15 | 85 | Yes | 1 |
| 4 | 2.7 | 12 | 88 | n-a | n-a |
| 5 | 2.0 | 19 | 81 | Yes | n-a |
| 6 | 2.9 | 15 | 85 | Yes | 1.35 |
| 7 | 2.95 | 11 | 89 | Yes | 1.2 |
| 8 | 2.8 | <u>65</u> | <u>35</u> | Yes | n-a |
| 9 | 2.7 | <u>20</u> | <u>80</u> | n-a | n-a |
| 10 | 2.7 | <u>20</u> | <u>80</u> | n-a | n-a |
| 11 | 2.9 | <u>40</u> | <u>60</u> | Yes | n-a |
| 12 | 2.7 | <u>5</u> | <u>95</u> | n-a | n-a |
| <u>13</u> | 2.6 | <u>30</u> | <u>70</u> | n-a | n-a |

(continued)

| Trial | Sheet thickness (mm) | (Ferrite + Bainite) (%) | Tempered martensite (%) | Presence of Ferrite layer | Ferrite layer thickness ratio over the sheet thickness (%) |
|---|---|---|---|---|---|
| 14 | 2.6 | <u>25</u> | <u>75</u> | n-a | n-a |
| 15 | 2.8 | 5 | 95 | n-a | n-a |
| 16 | 2.1 | 19 | 81 | Yes | 0.8 |
| 17 | 2.1 | 16 | 84 | Yes | 0.95 |
| 18 | 2.1 | <u>25</u> | <u>75</u> | Yes | n-a |
| Underlined values: not corresponding to the invention. n-a: non-assessed | | | | | |

Table 4: Mechanical properties of the heat-treating final steel sheet.

| Trial | YS (MPa) | TS (MPa) | Total Elongation (%) | Hole expansion ratio (%) | Charpy energy at 20°C (J/cm$^2$) |
|---|---|---|---|---|---|
| 1 | 926 | 1114 | 11 | 73 | 86 |
| 2 | 832 | 1029 | 13 | 57 | - |
| 3 | 846 | 1080 | 12 | 75 | - |
| 4 | 942 | 1046 | 10 | 73 | 89 |
| 5 | 788 | 1028 | 12 | 66 | 94 |
| 6 | 850 | 1000 | 13 | 70 | - |
| 7 | 870 | 1010 | 13 | 81 | 94 |
| 8 | 821 | <u>911</u> | 9 | <u>33</u> | - |
| 9 | 823 | <u>907</u> | 9 | 47 | - |
| 10 | 809 | <u>873</u> | 13 | 52 | - |
| 11 | <u>764</u> | <u>944</u> | 15 | <u>36</u> | - |
| 12 | <u>1159</u> | <u>1205</u> | 8 | <u>21</u> | - |
| 13 | 819 | <u>921</u> | 11 | <u>35</u> | - |
| 14 | 791 | <u>881</u> | 13 | <u>39</u> | - |
| 15 | 952 | 1150 | 14 | <u>40</u> | - |
| 16 | 806 | 1013 | 14 | 59 | - |
| 17 | 838 | 1054 | 9 | 78 | - |
| 18 | <u>718</u> | 957 | 15 | <u>44</u> | - |
| Underlined values: TS, YS, total elongation or HER values are insufficient. | | | | | |

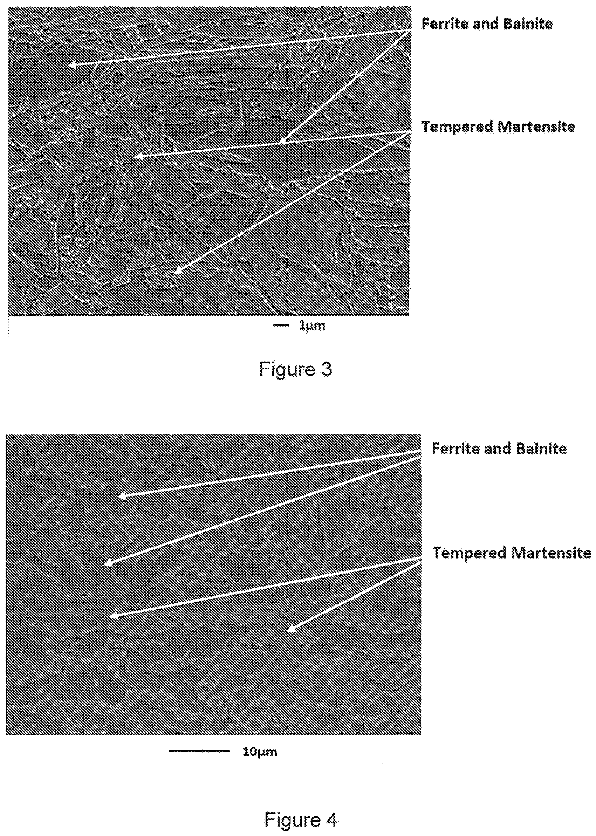

In the trials 1-7 and 16-17, compositions and manufacturing conditions correspond to the invention. Thus, the desired microstructure is obtained. Figure 3 illustrates the microstructure obtained in trial 7, containing 89% of tempered martensite and 11% of ferrite and bainite. As a consequence, high tensile properties and high hole expansion ratio are obtained. The toughness of the sheets is high since the Charpy energy at 20°C is well above 50J/cm$^2$.

In the trials 1-3, 6-7, 16-17, a ferrite layer is present on the main surfaces of the steel sheet, thus making it possible to achieve higher bending properties. In particular for trial 7, the bending radius divided by the sheet thickness is lower than 1 in the rolling direction and lower than 1.5 in the transverse direction which indicates excellent bending properties.

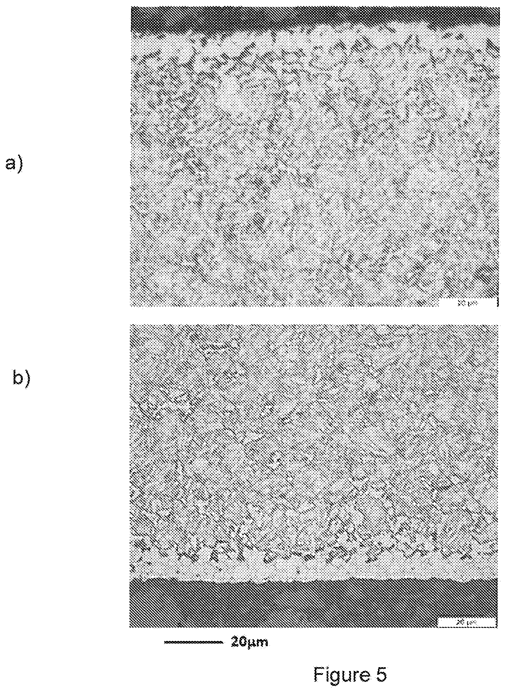

Figure 5 a) and b) illustrate the ferrite layer respectively present on the two opposite main surfaces of the steel sheet in trial 7 in the sheets manufactured.

Trials 8-11 and 18 do not match with the manufacturing conditions of the invention. As a result, the heat-treated steel sheet does not fulfill the requested mechanical properties.

Indeed, in the trial 8, the coiling temperature is higher than 160°C and exceeds the martensite end transformation temperature. Thus, an excessive ferrite amount is created, decreasing the tensile strength value and the hole expansion ratio.

In the trials 9 and 10, the parameter $P_A$ exceeds 17500, the batch heat-treating temperature exceeds 475°C. 80% of tempered martensite is present in the final microstructure, thus the tensile strength does not match 950MPa. In the trial 11, the finish hot rolling temperature is below 875°C. Thus, austenite is promoted and excessive ferrite is created during cooling. Figure 4 illustrates the microstructure obtained in trial 11, containing 60% of tempered martensite and 40% of ferrite and bainite. Thus, the yield strength, tensile strength and hole expansion are insufficient.

In the trial 18, the intermediate duration $t_2$ in the cooling scheme is higher than 5s. Thus, excessive amounts of ferrite and bainite are created, reducing the yield strength, tensile strength and the hole expansion values.

In the trials 12-15, the steel compositions are outside the ranges of the invention. Therefore, the final steel sheet does not match with mechanical and microstructural features.

In the trial 12, the carbon, manganese and silicon content of the steel composition exceed the values defined by the invention. Thus, an insufficient amount of ferrite and bainite is present, and the hole expansion properties are insufficient.

On the opposite, in the trial 13, the carbon content is lower than 0.15%, thus insufficient values of tensile strength and hole expansion are obtained.

In the trial 14, the carbon, silicon, aluminium and chromium content of the steel, are not according to the invention. In particular, due to the low carbon content, an excessive amount of ferrite and bainite is created, which does not make it possible to obtain sufficient tensile stress and hole expansion values. Finally, in the trial 15, the manganese content is higher than 2%. Thus, an insufficient amount of ferrite and bainite is obtained, and the hole expansion value does not reach 45%.

Thus, the steel sheet according to this invention can be used with profit for the manufacturing of structural parts of automotive vehicles.

**Claims**

1. - A hot rolled steel sheet having a chemical composition comprising, in weight %:

   0.15% ≤ C ≤ 0.20%
   0.50% ≤ Mn ≤ 2.00%
   0.25% ≤ Si ≤ 1.25%
   0.10% ≤ Al ≤ 1.00%,
   with 1.00% ≤ (Al+Si) ≤ 2.00%,
   0.001% ≤ Cr ≤ 0.250%
   P ≤ 0.02%
   S ≤ 0.005%
   N ≤ 0.008%
   and optionally one or more elements among:

      0.005% ≤ Mo ≤ 0.250%
      0.005% ≤ V ≤ 0.250%
      0.0001 % ≤ Ca ≤ 0.003% and
      0.001% ≤ Ti ≤ 0.025%,

   the remainder being Fe and unavoidable impurities, and wherein the microstructure comprises in surface fraction, ferrite and bainite, the sum of which being greater than 5% and strictly lower than 20%, the remainder consisting of tempered martensite.

2. A hot rolled steel sheet according to claim 1 wherein Si content is comprised between 0.40% and 0.90%.

3. A hot rolled steel sheet according to any one of claims 1 or 2 wherein Al is comprised between 0.30% and 0.90%.

4. A hot rolled steel sheet according to any one of claims 1 to 3 wherein Al+Si content is comprised between 1.20% and 2.00%.

5. A hot rolled steel sheet according to any one of claims 1 to 4, wherein the hot rolled steel sheet has a yield strength YS comprised between 780MPa and 1000MPa and a tensile strength TS comprised between 950MPa and 1150MPa.

6. A hot rolled steel sheet according to any one of claims 1 to 5, wherein the hot rolled steel sheet has a total elongation higher than 8%.

7. A hot rolled steel sheet according to any one of claims 1 to 6, wherein the hot rolled steel sheet has a hole expansion HER higher than 45%.

8. A hot rolled steel sheet according to any one of claims 1 to 7, wherein the hot rolled steel sheet has a Charpy V energy higher than $50J/cm^2$ at 20°C.

9. A hot rolled steel sheet according to any one of claims 1 to 8, wherein the thickness is comprised between 1.8 and 4.5 mm.

10. A hot rolled steel sheet according to any one of claims 1 to 9 comprising a ferrite layer at the surface with a thickness less than 5% of the thickness of the said hot rolled steel sheet.

11. A hot rolled steel sheet according to any one of claims 1 to 10 wherein the hot rolled steel sheet is coated with zinc or a zinc-based alloy.

12. A hot rolled steel sheet according to claim 11, wherein the zinc-based coating comprising from 0.01 to 8.0% by weight of Al, optionally from 0.2 to 8.0% by weight of Mg, the remainder being Zn.

13. A hot rolled steel sheet according to claim 11, wherein the zinc-based coating comprising between 0.15 and 0.40% by weight of Al, the balance being Zn.

14. A process for manufacturing a hot rolled steel sheet according to any one of claims 1 to 10 comprising the following and successive steps:

- providing a steel semi-product with composition according to any one of claims 1 to 4, then
- hot rolling said steel semi-product with a final rolling temperature comprised between 875°C and 950°C, so to obtain a steel sheet, then
- cooling said steel sheet at a cooling rate $V_{R1}$ of at least 50°C/s, so to obtain a cooled steel sheet, then
- coiling at a temperature $T_{coil}$ below 160°C and below Mf, so to obtain a coiled steel sheet, then
- heat-treating the said coiled sheet to a heat-treating temperature $\theta_A$, for a duration $t_A$, $\theta_A$ and $t_A$ being such that $P_A = \theta_A (22+ \log_{10} t_A)$, is comprised between 15400 and 17500, $\theta_A$ being expressed in K and $t_A$ being expressed in hours.

15. A process for manufacturing a hot rolled steel sheet according to claim 14, wherein said heat-treating step is performed by batch in an inert or an HNX atmosphere, at a heat-treating temperature $\theta_A$ comprised between 400°C and 475°C, the duration $t_A$ at said annealing temperature being comprised between 10 and 25h.

16. A process for manufacturing a hot rolled steel sheet according to claim 14, wherein said heat-treating step is performed on a continuous annealing line, to a heat-treating temperature $\theta_A$ comprised between 500°C and 600°C, the duration $t_A$ at said heat-treating temperature being comprised between 40s and 100s.

17. A process for manufacturing a hot rolled steel sheet according to any one of claims 14 to 16, wherein $P_A$ is comprised between 15500 and 17000.

18. A process for manufacturing a hot rolled steel sheet according to any one of claims 14 to 17, further comprising a pickling step after the said coiling step, and before said heat-treating step.

19. A process for manufacturing according to any of claims 14 to 18, further comprising a pickling step after said heat-treating step.

**20.** A process for manufacturing according to any one of claims 14 to 19, wherein said cooling is performed by water cooling and wherein $V_{R1}$ is higher than 75°C/s.

**21.** A process for manufacturing according to any one of claim 14 to 20, the cooling step at said cooling rate $V_{R1}$ is performed so to reach an intermediate temperature Ti, comprised between 500 to 550°C, then,

    - a further air cooling step is performed for a duration $t_2$ comprised between 1 and 5 seconds, then
    - the sheet is cooled at a cooling rate $V_{R2}$ higher than 40°C/s.

**22.** Production process according to claim 21, wherein the said air cooling step is performed for a duration $t_2$ comprised between 2 and 3 seconds.

**23.** Use of the hot rolled steel sheet according to any one of claims 1 to 13, or manufactured according to any one of claims 14 to 22, for the manufacturing of structural parts of vehicles.


**Patentansprüche**

**1.** Warmgewalztes Stahlblech, das eine chemische Zusammensetzung aufweist, umfassend in Gewichtsprozent:

    $0,15\% \leq C \leq 0,20\%$
    $0,50\% \leq Mn \leq 2,00\%$
    $0,25\% \leq Si \leq 1,25\%$
    $0,10\% \leq Al \leq 1,00\%$
    wobei $1,00\% \leq (Al+Si) \leq 2,00\%$,
    $0,001\% \leq Cr \leq 0,250\%$
    $P \leq 0,02\%$
    $S \leq 0,005\%$
    $N \leq 0,008\%$
    und optional ein oder mehrere Elemente von:

    $0,005\% \leq Mo \leq 0,250\%$
    $0,005\% \leq V \leq 0,250\%$
    $0,0001\% \leq Ca \leq 0,003\%$,
    $0,001\% \leq Ti \leq 0,025\%$

wobei der Rest Fe und unvermeidbare Verunreinigungen sind, und wobei das Gefüge in der Oberflächenfraktion Ferrit und Bainit umfasst, deren Summe mehr als 5 % und weniger als 20 % ist, wobei der Rest aus getempertem Martensit besteht.

**2.** Warmgewalztes Stahlblech nach Anspruch 1, wobei ein Si-Gehalt zwischen 0,40 % und 0,90 % liegt.

**3.** Warmgewalztes Stahlblech nach einem der Ansprüche 1 oder 2, wobei Al zwischen 0,30 % und 0,90 % liegt.

**4.** Stahlblech nach einem der Ansprüche 1 bis 3, wobei ein Gehalt an Al+Si zwischen 1,20 % und 2,00 %liegt.

**5.** Warmgewalztes Stahlblech nach einem der Ansprüche 1 bis 4, wobei das warmgewalzte Stahlblech eine Streckgrenze YS zwischen 780 MPa und 1000 MPa und eine Zugfestigkeit TS zwischen 950 MPa und 1150 MPa aufweist.

**6.** Warmgewalztes Stahlblech nach einem der Ansprüche 1 bis 5, wobei das warmgewalzte Stahlblech eine Gesamtdehnung von mehr als 8 % aufweist.

**7.** Warmgewalztes Stahlblech nach einem der Ansprüche 1 bis 6, wobei das warmgewalzte Stahlblech eine Lochausdehnung HER von mehr als 45 % aufweist.

**8.** Warmgewalztes Stahlblech nach einem der Ansprüche 1 bis 7, wobei das warmgewalzte Stahlblech eine Energie Charpy V von mehr 50 J/cm$^2$ bei 20°C aufweist.

9. Stahlblech nach einem der Ansprüche 1 bis 8, wobei die Stärke zwischen 1,8 und 4,5 mm liegt.

10. Warmgewalztes Stahlblech nach einem der Ansprüche 1 bis 9, umfassend eine Ferritschicht an der Oberfläche mit einer Stärke von weniger als 5 % der Stärke des warmgewalzten Stahlblechs.

11. Warmgewalztes Stahlblech nach einem der Ansprüche 1 bis 10, wobei das warmgewalzte Stahlblech mit Zink oder einer Legierung auf Zinkbasis beschichtet ist.

12. Verfahren nach Anspruch 11, wobei in die Beschichtung auf Zinkbasis von 0,01 bis 8,0 Gewichtsprozent Al, optional von 0,2 bis 8,0 Gewichtsprozent Mg umfasst, wobei der Rest Zn ist.

13. Verfahren nach Anspruch 11, die Beschichtung auf Zinkbasis umfassend zwischen 0,15 und 0,40 Gewichtsprozent Al, wobei der Rest Zn ist.

14. Verfahren zum Herstellen eines warmgewalzten Stahlblechs nach einem der Ansprüche 1 bis 10, umfassend die folgenden und aufeinanderfolgenden Schritte:

   - Bereitstellen eines Stahlhalbzeugs mit einer Zusammensetzung nach einem der Ansprüche 1 bis 4, dann
   - Warmwalzen des Stahlhalbzeugs mit einer abschließenden Walztemperatur, die zwischen 875 °C und 950 °C liegt, um ein Stahlblech zu erlangen, dann
   - Abkühlen des Stahlblechs mit einer Abkühlgeschwindigkeit $V_{R1}$ von mindestens 50 °C/s, um ein gekühltes Stahlblech zu erlangen, dann
   - Aufwickeln bei einer Temperatur $T_{coil}$ unter 160 °C und unter Mf, um ein aufgewickeltes Stahlblech zu erlangen, dann
   - Wärmebehandeln des aufgewickelten Blechs bei einer Wärmebehandlungstemperatur $\theta_A$ über eine Dauer $t_A$, wobei $\theta_A$ und $t_A$ derart sind, dass $P_A = \theta_A (22 + \log_{10} t_A)$ zwischen 15.400 und 17.500 liegt, wobei $\theta_A$ in K ausgedrückt wird und $t_A$ in Stunden ausgedrückt wird.

15. Verfahren zum Herstellen eines warmgewalzten Stahlblechs nach Anspruch 14, wobei der Wärmebehandlungsschritt chargenweise in einer inerten oder einer HNX-Atmosphäre bei einer Wärmebehandlungstemperatur $\theta_A$ zwischen 400 °C und 475 °C ausgeführt wird, wobei die Dauer $t_A$ bei der Glühtemperatur zwischen 10 und 25 h liegt.

16. Verfahren zum Herstellen eines warmgewalzten Stahlblechs nach Anspruch 14, wobei der Wärmebehandlungsschritt auf einer kontinuierlichen Glühlinie bis zu einer Wärmebehandlungstemperatur $\theta_A$ zwischen 500 °C und 600 °C ausgeführt wird, wobei die Dauer $t_A$ bei der Wärmebehandlungstemperatur zwischen 40 s und 100 s liegt.

17. Verfahren zum Herstellen eines warmgewalzten Stahlblechs nach einem der Ansprüche 14 bis 16, wobei $P_A$ zwischen 15500 und 17000 liegt.

18. Verfahren zum Herstellen eines warmgewalzten Stahlblechs nach einem der Ansprüche 14 bis 17, ferner umfassend einen Beizschritt nach dem Aufwickelschritt und vor dem Wärmebehandlungsschritt.

19. Verfahren zum Herstellen nach einem der Ansprüche 14 bis 18, ferner umfassend einen Beizschritt nach dem Wärmebehandlungsschritt.

20. Verfahren zum Herstellen nach einem der Ansprüche 14 bis 19, wobei die Kühlung durch Wasserkühlung ausgeführt wird und wobei $V_{R1}$ höher ist als 75 °C/s.

21. Verfahren zum Herstellen nach einem der Ansprüche 14 bis 20, wobei der Abkühlungsschritt mit der Abkühlungsrate $V_{R1}$ ausgeführt wird, um eine Zwischentemperatur $T_i$ zu erreichen, die zwischen 500 und 550 °C liegt, dann,

   - ein weiterer Luftkühlungsschritt über eine Dauer $t_2$ zwischen 1 und 5 Sekunden ausgeführt wird, dann
   - das Blech mit einer Abkühlgeschwindigkeit $V_{R2}$ höher als 40 °C/s abgekühlt wird.

22. Produktionsverfahren nach Anspruch 21, wobei der Luftkühlungsschritt über eine Dauer $t_2$ zwischen 2 und 3 Sekunden ausgeführt wird.

23. Verwendung des warmgewalzten Stahlblechs nach einem der Ansprüche 1 bis 13 oder hergestellt nach einem der Ansprüche 14 bis 22 zum Herstellen von Strukturteilen von Fahrzeugen.

**Revendications**

1. Tôle d'acier laminée à chaud ayant une composition chimique comprenant, en % en poids :

   $0,15\% \leq C \leq 0,20\%$
   $0,50\% \leq Mn \leq 2,00\%$
   $0,25\% \leq Si \leq 1,25\%$
   $0,10\% \leq Al \leq 1,00\%$,
   avec $1,00\% \leq (Al+Si) \leq 2,00\%$,
   $0,001\% \leq Cr \leq 0,250\%$
   $P \leq 0,02\%$
   $S \leq 0,005\%$
   $N \leq 0,008\%$
   et facultativement un ou plusieurs éléments parmi :

   $0,005\% \leq Mo \leq 0,250\%$
   $0,005\% \leq V \leq 0,250\%$
   $0,0001\% \leq Ca \leq 0,003\%$ et
   $0,001\% \leq Ti \leq 0,025\%$

   le reste étant du Fe et des impuretés inévitables, et dans laquelle la microstructure comprend, en fraction de surface, de la ferrite et de la bainite, dont la somme est supérieure à 5 % et strictement inférieure à 20 %, le reste étant constitué de martensite revenue.

2. Tôle d'acier laminée à chaud selon la revendication 1, dans laquelle la teneur en Si est comprise entre 0,40 % et 0,90 %.

3. Tôle d'acier laminée à chaud selon l'une quelconque des revendications 1 et 2, dans laquelle la teneur en Al est comprise entre 0,30 % et 0,90 %.

4. Tôle d'acier laminée à chaud selon l'une quelconque des revendications 1 et 3, dans laquelle la teneur en Al+Si est comprise entre 1,20 % et 2,00 %.

5. Tôle d'acier laminée à chaud selon l'une quelconque des revendications 1 à 4, dans laquelle la tôle d'acier laminée à chaud a une limite d'élasticité YS comprise entre 780 MPa et 1 000 MPa et une résistance à la traction TS comprise entre 950 MPa et 1 150 MPa.

6. Tôle d'acier laminée à chaud selon l'une quelconque des revendications 1 à 5, dans laquelle la tôle d'acier laminée à chaud présente un allongement total supérieur à 8 %.

7. Tôle d'acier laminée à chaud selon l'une quelconque des revendications 1 à 6, dans laquelle la tôle d'acier laminée à chaud a une expansion de trou HER supérieure à 45 %.

8. Tôle d'acier laminée à chaud selon l'une quelconque des revendications 1 à 7, dans laquelle la tôle d'acier laminée à chaud présente une énergie Charpy V supérieure à 50 J/cm$^2$ à 20 °C.

9. Tôle d'acier laminée à chaud selon l'une quelconque des revendications 1 à 8, dans laquelle l'épaisseur est comprise entre 1,8 et 4,5 mm.

10. Tôle d'acier laminée à chaud selon l'une quelconque des revendications 1 à 9, comprenant une couche de ferrite en surface d'une épaisseur inférieure à 5 % de l'épaisseur de ladite tôle d'acier laminée à chaud.

11. Tôle d'acier laminée à chaud selon l'une quelconque des revendications 1 à 10, dans laquelle la tôle d'acier laminée à chaud est revêtue de zinc ou d'un alliage à base de zinc.

**12.** Tôle d'acier laminée à chaud selon la revendication 11, dans laquelle le revêtement à base de zinc comprend de 0,01 à 8,0 % en poids d'Al, facultativement de 0,2 à 8,0 % en poids de Mg, le reste étant du Zn.

**13.** Tôle d'acier laminée à chaud selon la revendication 11, dans laquelle le revêtement à base de zinc comprend entre 0,15 et 0,40 % en poids d'Al, le reste étant du Zn.

**14.** Procédé de fabrication d'une tôle d'acier laminée à chaud selon l'une quelconque des revendications 1 à 10 comprenant les étapes suivantes et successives :

- fourniture d'un demi-produit d'acier présentant une composition selon l'une quelconque des revendications 1 à 4, puis
- laminage à chaud dudit demi-produit d'acier à une température de laminage finale comprise entre 875 °C et 950 °C, de façon à obtenir une tôle d'acier, puis
- refroidissement de ladite tôle d'acier à une vitesse de refroidissement $V_{R1}$ d'au moins 50 °C/s, de manière à obtenir une tôle d'acier refroidie, puis
- bobinage à une température $T_{coil}$ inférieure à 160 °C et inférieure à Mf, afin d'obtenir une tôle d'acier bobinée, puis
- traitement thermique de ladite tôle bobinée à une température de traitement thermique $\theta_A$, pendant une durée $t_A$, $\theta_A$ et $t_A$ étant tels que $P_A = \theta_A (22 + \log_{10} t_A)$, est compris entre 15 400 et 17 500, $\theta_A$ étant exprimé en K et $t_A$ étant exprimé en heures.

**15.** Procédé de fabrication d'une tôle d'acier laminée à chaud selon la revendication 14, dans lequel ladite étape de traitement thermique est réalisée de manière discontinue dans une atmosphère inerte ou HNX, à une température de traitement thermique $\theta_A$ comprise entre 400 °C et 475 °C, la durée $t_A$ à ladite température de recuit étant comprise entre 10 et 25 h.

**16.** Procédé de fabrication d'une tôle d'acier laminée à chaud selon la revendication 14, dans lequel ladite étape de traitement thermique est réalisée sur une ligne de recuit continue, à une température de traitement thermique $\theta_A$ comprise entre 500 °C et 600 °C, la durée $t_A$ à ladite température de traitement thermique étant comprise entre 40 s et 100 s.

**17.** Procédé de fabrication d'une tôle d'acier laminée à chaud selon l'une quelconque des revendications 14 à 16, dans lequel $P_A$ est compris entre 15 500 et 17 000.

**18.** Procédé de fabrication d'une tôle d'acier laminée à chaud selon l'une quelconque des revendications 14 à 17, comprenant en outre une étape de décapage après ladite étape de bobinage et avant ladite étape de traitement thermique.

**19.** Procédé de fabrication selon l'une quelconque des revendications 14 à 18, comprenant en outre une étape de décapage après ladite étape de traitement thermique.

**20.** Procédé de fabrication selon l'une quelconque des revendications 14 à 19, dans lequel ledit refroidissement est effectué par eau et dans lequel $V_{R1}$ est supérieure à 75 °C/s.

**21.** Procédé de fabrication selon l'une quelconque des revendications 14 à 20, l'étape de refroidissement à ladite vitesse de refroidissement $V_{R1}$ est réalisée de manière à atteindre une température intermédiaire $T_i$, comprise entre 500 et 550 °C, puis,

- une étape supplémentaire de refroidissement par air est effectuée pendant une durée $t_2$ comprise entre 1 et 5 secondes, puis
- la tôle est refroidie à une vitesse de refroidissement $V_{R2}$ supérieure à 40 °C/s.

**22.** Procédé de production selon la revendication 21, dans lequel ladite étape de refroidissement par air est effectuée pendant une durée $t_2$ comprise entre 2 et 3 secondes.

**23.** Utilisation de la tôle d'acier laminée à chaud selon l'une quelconque des revendications 1 à 13 ou fabriquée selon l'une quelconque des revendications 14 à 22, pour la fabrication de pièces structurelles de véhicules.

Figure 1

Figure 2

Figure 3

Figure 4

a)

b)

20µm

Figure 5

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- EP 1138796 A
- WO 2018108653 A
- WO 2012130434 A
- WO 2018115935 A

### Non-patent literature cited in the description

- **A. CONSTANT ; G. HENRY ; J.C. CHARBONNIER.** Principes de bases des traitements thermiques, thermomécaniques et thermochimiques des aciers. PYC, 1992, 190-191
- Steel castings Handbook - 6th edition. **MALCOM BLAIR ; THOMAS L STEVENS ; ANDREWS.** Journal of the Iron and Steel Institute. 1965, vol. 203, 721-727